(19) Europäisches Patentamt
European Patent Office
Office européen des brevets

(11) EP 1 605 282 A1

(12) # DEMANDE DE BREVET EUROPEEN

(43) Date de publication:
**14.12.2005 Bulletin 2005/50**

(51) Int Cl.⁷: **G02B 1/06**, G02B 6/16, G02B 6/34

(21) Numéro de dépôt: **05104741.3**

(22) Date de dépôt: **01.06.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **08.06.2004 FR 0451127**

(71) Demandeur: **ALCATEL
75008 Paris (FR)**

(72) Inventeurs:
- **Girardon, Valérie
91220, Bretigny/Orge (FR)**
- **Riant, Isabelle
91400, Orsay (FR)**
- **Bonnet, Xavier
78470, St Remy les Chevreuse (FR)**
- **Fradet, Alain
92130, Issy-Les-Moulineaux (FR)**
- **Lefebvre, Hervé
78220, Viroflay (FR)**

(74) Mandataire: **Lamoureux, Bernard
COMPAGNIE FINANCIERE ALCATEL
Département Propriété Industrielle
54, rue La Boétie
75008 Paris (FR)**

(54) **Dispositif optique comprenant un sel à l'état liquide**

(57) La présente invention a pour objet un dispositif optique comprenant un composant optique et un milieu optique d'indices optiques différents, ledit composant optique étant au moins partiellement immergé dans ledit milieu, caractérisé en ce que ledit milieu comprend au moins un sel qui se trouve à l'état liquide dans le domaine de température d'utilisation et de stockage dudit composant optique, c'est à dire dans une plage de température généralement comprise entre -40°C et +200°C. Le composant optique peut être notamment un réseau de Bragg à long pas, dit "LPG" ou une fibre à cristal photonique.

**Fig. 5**

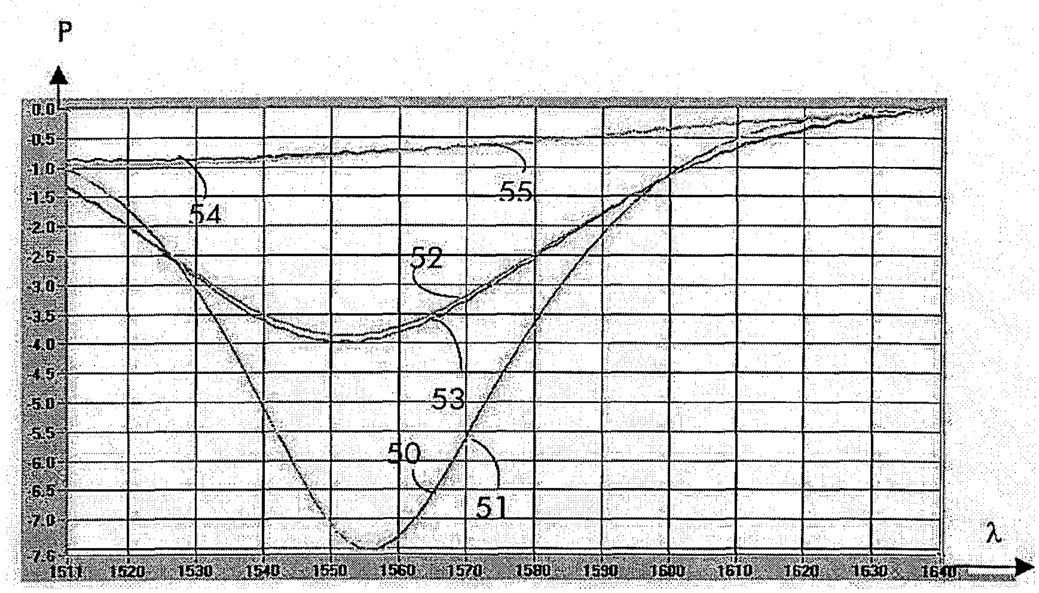


EP 1 605 282 A1

## Description

La présente invention se rapporte au domaine des dispositifs optiques comprenant un composant optique et un milieu optique d'indices optiques différents, dans lesquels les propriétés optiques du composant optique dépendent au moins partiellement de ce milieu optique. Les composants optiques peuvent être de volume ou intégrés dans des guides d'onde tels que des fibres optiques ou des guides d'onde planaires. Ces guides d'ondes, fibrés ou plans, peuvent être à cristal photonique. Ces composants optiques peuvent être par exemple des réseaux de Bragg, dont les traits sont droits ou en angle, à pas courts ou à longs pas, des coupleurs, des interféromètres Mach-Zehnder à base de coupleurs, des fibres effilées ("tapers" en anglais) ou encore des tronçons de fibre spécifique comme des tronçons de fibre à cristal photonique. A titre illustratif mais non limitatif, l'invention est décrite ci-après plus spécifiquement dans le cas des dispositifs optiques comprenant, à titre de composants optiques, des réseaux de Bragg dit "à long pas" (LPG) utilisés pour réaliser des égaliseurs de gain dynamiques, notamment des filtres égaliseurs.

Un guide d'onde est classiquement composé d'un coeur optique, ayant pour fonction de transmettre et éventuellement d'amplifier un signal optique, entouré d'une gaine optique, ayant pour fonction de confiner le signal optique dans le coeur. A cet effet, les indices de réfraction du coeur $n_1$ et de la gaine $n_2$ sont tels que $n_1>n_2$. Ainsi, le coeur et la gaine forment un guide d'onde. Comme cela est bien connu, la propagation d'un signal optique dans un guide d'onde monomode se décompose en un mode fondamental guidé dans le coeur et en des modes secondaires guidés sur une certaine distance dans l'ensemble coeur-gaine optique, appelés également modes de gaine. La gaine est elle-même entourée d'un milieu extérieur d'indice de réfraction $n_3$ supérieur ou inférieur à $n_2$. L'ensemble coeur-gaine associé au milieu extérieur forme à nouveau un guide d'onde.

Le coeur et/ou la gaine du guide peuvent être dopés de manière à être rendus photosensibles en vue de l'inscription d'un réseau de Bragg, par exemple avec du germanium (Ge). Les réseaux classiquement utilisés pour des égalisations de gain sont des réseaux en angle ou réseaux inclinés, connus sous le terme de SBG pour "Slanted Bragg Grating" en anglais, ou bien des réseaux à long pas, connus sous le terme de LPG pour "Long Period Grating" en anglais. De tels réseaux sont conçus pour permettre un couplage du mode fondamental dans des modes de gaine. Ils constituent ainsi des filtres sans réflexion aux longueurs d'onde de filtrage.

Dans le cas d'un réseau à long pas (LPG), la réponse spectrale du filtre dépend de l'indice effectif $n_{effCoeur}$ du mode fondamental guidé dans le coeur ainsi que de l'indice effectif $n_{effGaine}$ du mode de gaine avec lequel il y a couplage. En effet, la relation de Bragg pour les réseaux à long pas s'exprime comme suit :

$$\lambda_B = \Lambda(n_{effCoeur} - n_{effGaine}), \text{ avec } \Lambda \text{ le pas du réseau LPG.}$$

Cette particularité des réseaux à long pas les rend particulièrement bien adaptés à des applications de filtres accordables car une action localisée sur le coeur, sur la gaine et/ou sur le milieu extérieur à la gaine peut induire une modification d'un des indices effectifs et donc de la longueur de Bragg ou de la forme spectrale du filtre. De plus les pertes d'insertion dans un tel filtre sont faibles car il est facilement soudable à une autre fibre composant ou directement à la fibre transmission, et les méthodes de fabrication connues de tels filtres permettent d'obtenir des pertes de dépendance à la polarisation très faibles.

Les filtres égaliseurs de gain, connus également sous l'acronyme de GFF pour "Gain Flattening Filter" en anglais, sont intégrés dans des dispositifs optiques associés à des amplificateurs optiques répartis régulièrement le long de lignes de transmission. Les amplificateurs optiques ne fournissent généralement pas une amplification égale pour toutes les longueurs d'onde, ce qui est particulièrement gênant dans le cas de transmission par multiplexage en longueur d'onde (WDM, pour "Wavelength Division Multiplexing" en anglais) pour lesquelles plusieurs signaux à différentes longueurs d'onde sont transmis sur une même fibre et amplifiés par les mêmes amplificateurs. Il est donc nécessaire d'associer aux amplificateurs en ligne des filtres égaliseurs de gain qui permettent de supprimer, ou au moins réduire, les disparités d'amplification des différents canaux de transmission d'un système optique.

Un système optique est souvent évolutif et il n'est pas rare que les paramètres d'un composant optique, tel qu'un égaliseur de gain, ne soient plus du tout adaptés aux spectres de transmission réels. Par exemple, une telle évolution peut être due à un vieillissement, à une variation de température, à des interventions localisées sur la ligne ou à des ajouts de modules optiques ou de canaux optiques de transmission après l'installation de la ligne. Les paramètres préalablement fixés des différents composants optiques du système optique deviennent alors inadaptés.

Les propriétés du composant optique doivent donc pouvoir être modifiées afin de les adapter à l'évolution des autres composants du système. Il est donc nécessaire de réaliser des composants optiques qui permettent d'accorder dynamiquement leur réponse spectrale pour correspondre aux évolutions des conditions de fonctionnement des systèmes optiques dans lesquels ils sont disposés, et ceci sur une large gamme spectrale et sans pertes.

L'immersion totale ou partielle d'une portion de guide d'onde dans un milieu externe, dont l'indice de réfraction est différent de l'indice de la gaine, induit une modification des conditions d'interface entre la gaine et le milieu extérieur.

Or, un LPG est particulièrement sensible aux modifications du milieu externe à la gaine du guide sur lequel il est inscrit.

Le document de H. LABIDI et al. intitulé "Dynamic gain control of optical amplifier using an all-fibre solution" présenté à la 28ème Conférence européenne sur l'Optique (8-12 septembre 2002) propose un dispositif basé sur la dépendance des propriétés optiques d'un LPG à son degré d'immersion dans un milieu d'indice donné différent de celui du guide d'onde. En pratique, au moins un réservoir contenant un liquide d'indice donné coulisse le long du réseau permettant de contrôler la longueur immergée dans le liquide. Ainsi il est possible de modifier la réponse spectrale du filtre selon le niveau d'immersion du réseau à long pas dans le milieu externe.

Parmi les milieux optiques susceptibles d'être utilisés, on emploie de préférence les milieux liquides. On connaît notamment les mélanges de solvants de la marque "CARGILLE" mais ceux-ci sont inadaptés à une utilisation dans le domaine des télécommunications. D'une part ils subissent un vieillissement rapide par évaporation (par exemple l'évaporation totale à température ambiante s'effectue en une semaine) ; or pour une application en télécommunication, il est demandé d'assurer une durée d'utilisation d'au moins 15 ans pour le réseau terrestre et d'au moins 25 ans pour le réseau sous-marin. D'autre part l'état liquide de ces solvants n'est pas conservé aux basses et hautes températures (transitions de type solidification aux basses températures et évaporation aux hautes températures); or les composants optiques de télécommunication sont exposés à des températures pouvant varier de -40°C à +85°C, voire plus.

La présente invention a donc pour but de proposer dispositif optique dans lequel les propriétés optiques, par exemple la réponse spectrale, du composant optique peuvent être au moins partiellement contrôlées par modification de l'indice optique du milieu optique de manière à adapter les propriétés optiques du composant optique à l'évolution des autres composants du système optique.

L'objet de la présente invention est un dispositif optique comprenant un composant optique et un milieu optique d'indices optiques différents, ledit composant optique étant au moins partiellement immergé dans ledit milieu, dans lequel ledit milieu comprend au moins un sel qui se trouve à l'état liquide dans le domaine de température d'utilisation et de stockage dudit composant optique.

La température à laquelle le sel est dans un état liquide est de préférence comprise entre -40°C et +200°C. La température de fonctionnement du composant optique varie le plus souvent de -10°C à +70°C, mais le composant optique est susceptible d'être stocké à des températures comprises entre -40°C et +85°C. Le sel doit donc se trouver à l'état liquide dans cette plage et le dispositif ne doit pas être altéré par un changement de phase du sel, notamment par le passage de la phase liquide à la phase solide.

Les sels selon l'invention se trouvent à l'état liquide sur une large plage de température englobant la température ambiante, et sont appelés des RTILs pour "Room Temperature Ionic Liquid" en anglais. Ils sont aussi souvent appelés "liquides ioniques" car ce sont des composés, ou des mélanges de plusieurs composés, contenant des espèces dissociées sous forme ionique.

Les sels utilisés dans la présente invention ont comme avantage leur conductivité électrique élevée, leur stabilité thermique, leur résistance au vieillissement. En outre s'agissant de sels, ils ne sont ni inflammables, ni volatiles. En effet leur température d'ébullition est inexistante car ils se dégradent généralement au-delà de 250°C sans passer à l'état vapeur.

La plupart de ces sels présentent l'avantage de posséder une toxicité réduite et d'être miscibles avec les solvants habituellement utilisés pour le nettoyage en cours de fabrication. La plupart des sels selon la présente invention se montrent stables à température élevée en présence d'humidité (par exemple +85°C et 85% d'humidité relative) au regard de leur indice de réfraction (par exemple mesuré à 1500 nm et 589 nm avant et après le test) et de leur viscosité.

Le milieu optique selon l'invention contient de préférence un mélange d'au moins deux sels. On entend par mélange aussi bien l'addition de deux sels chacun se présentant à l'état liquide, qu'une solution d'au moins un premier sel liquide dans lequel est dissout et se dissocie au moins un deuxième sel se présentant initialement à l'état solide. L'indice de réfraction du milieu dépend de la composition du mélange de sels. Cette propriété à l'avantage de permettre d'obtenir très précisément l'indice souhaité, en particulier sur une gamme d'indice de réfraction de 1,35 à 1,52 mesuré à 589 nm.

L'indice de réfraction de ces sels varie avec la température, mais très faiblement. Dans certains cas, cette variation est trop faible pour induire une variation de la réponse du composant optique. Ceci est particulièrement intéressant dans le cas où la variation de la réponse spectrale du composant optique est obtenue par une modification de la zone d'immersion dudit composant optique. C'est le cas dans l'exemple du réseau LPG décrit plus spécifiquement dans ce texte, dans lequel l'adaptation du milieu d'indice de réfraction est induite par un déplacement de la zone de contact entre le composant et le milieu d'indice de réfraction. En effet, dans le cas des LPG, la variation d'indice de réfraction avec la température n'a pas de conséquence sur l'allure du filtre dans les conditions d'utilisation du composant optique terrestre, à savoir de -10°C à 70°C (soit une plage de 80°C). La réponse spectrale d'un filtre LPG, inscrit dans une fibre de profil adapté, entouré d'un milieu d'indice 1.46 ou 1.47 ne présente pas de différence sensible

En revanche, dans certains cas, la variation d'indice de réfraction d milieu optique avec la température est

suffisante pour modifier la réponse du composant optique. Par exemple, lorsque la variation d'indice de réfraction avec la température est considérée comme élevée (par exemple de -20°C à 120°C, soit une plage de 140°C), le profil d'une fibre à cristal photonique peut être ajusté selon la température du milieu optique et des variations spectrales en transmission sur le composant optique peuvent être ainsi induites. On a observé, dans le cas de composants optiques accordables à base de fibre à cristal photonique, une réponse spectrale significativement différente pour des milieux optiques dont l'indice de réfraction varie entre 1.46 et 1.48.

Selon un mode de réalisation préférentiel de l'invention, le sel comprend un anion et un cation.

L'anion est choisi de préférence parmi un fluorure $F^-$, un chlorure $Cl^-$, un bromure $Br^-$, un iodure $I^-$, un perchlorate $ClO_4^-$, un aluminochlorate $AlClO_4^-$, un tétrafluoroborate $BF_4^-$, un hexafluorophosphate $PF_6^-$, un hydrogénosulfate $HSO_4^-$, un trifluoroacétate $CF_3COO^-$, un heptafluoro-1-butanoate $C_3F_7COO^-$, un trifluoromethanesulfonate $CF_3SO_3^-$ (ou "triflate" $TfO^-$), un nonafluorobutylsulfonate $C_4F_9SO_3^-$ (ou "nonaflate" $NfO^-$), un bis-trifluoromethanesulfonimide $(CF_3SO_2)_2N^-$(ou $Tf_2N^-$), et un bis-trifluoromethanesulfoneméthide $(CF_3SO_2)_2C^-$ (ou $Tf_2C$-).

Le cation est choisi de préférence parmi l'ammonium $NH_4^+$, le sulfonium $HSO_3^+$, le phosphonium $PH_4^+$, le lithium $Li^+$, le pyridinium $C_5H_5NH^+$, les cations imidazolium $(C_3H_6N_2X^1X^2)^+$, les cations ammonium $(X^1X^2X^3X^4N_4)^+$, les cations sulfonium $(X^1X^2X^3S)^+$, les cations phosphonium $(X^1X^2X^3X^4P)^+$, et les cations pyridinium $(X^1C_5H_4NX^2)^+$, dans lesquels $X^1$, $X^2$, $X^3$, $X^4$ représentent des groupements de type aromatique ou aliphatique.

Selon une forme d'exécution préférée de l'invention, le sel est choisi parmi les sels d'imidazolium. De préférence le sel a pour cation le N, N' dialkylimidazolium de formule générale :

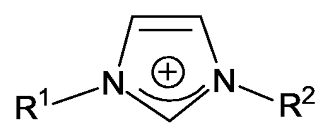

dans laquelle $R^1$ et $R^2$ sont des groupes aliphatiques ou aromatiques coordinés avec un contre-ion, comme par exemple un anion. $R^1$ et $R^2$ peuvent être semblables ou différents et contiennent au moins un anion choisi de préférence parmi $F^-$, $Cl^-$, $Br^-$, $I^-$, $BF_4^-$, $PF_6^-$, $ClO_4^-$, $AlClO_4^-$, $CF_3COO^-$, $C_3F_7COO^-$, $CF_3SO_3^-$, $C_4F_9SO_3^-$, $(CF_3SO_2)_2N^-$, $(CF_3SO_2)_2C^-$,... Comme exemple de groupe aliphatique, on peut citer le groupe méthyle $-CH_3$, éthyle $-C_2H_6$, propyle $-C_3H_7$ et butyle $-C_4H_9$.

Dans ce cas, le sel contient un anion choisi de préférence parmi $Cl^-$, $Br^-$, $PF_6^-$, $BF_4^-$, $(CF_3SO_2)_2N^-$, $C_4F_9SO_3^-$. Selon la nature des groupes $R^1$ et $R^2$ et de l'anion associé, le sel présente une température de liquéfaction différente. Ainsi il est possible de choisir les familles de sels qui sont liquides à la température d'utilisation et de stockage du composant optique.

En outre les propriétés physico-chimiques, et notamment l'indice de réfraction du sel peut être accordé en modifiant les groupes $R^1$ et/ou $R^2$, et/ou l'anion associé. On sait notamment que l'insertion d'atomes de fluor dans la structure du cation et de l'anion diminue l'indice de réfraction. Au contraire la présence d'anions halogénés tels que $Br^-$, $Cl^-$ et $I^-$ augmente l'indice de réfraction du sel. On dispose ainsi d'un large choix d'indices de réfraction en mélangeant au moins deux sels ou en dissolvant un sel solide dans un autre sel liquide à la température d'opération. La reproductibilité de la fabrication d'un tel mélange, ainsi que l'homogénéité du mélange obtenu ont été montrées.

Selon un mode de réalisation particulier, le composant optique est un réseau de Bragg à long pas, dit "LPG". Dans ce cas le réseau est accordé de préférence par modification de la zone d'immersion. La réponse optique du réseau, en contact avec le milieu selon l'invention, est sensiblement constante dans la plage d'utilisation du composant optique, comprise entre -10°C et +70°C.

Selon un autre mode de réalisation, le composant optique est un tronçon de fibre à cristal photonique. Dans ce cas la réponse de la fibre est accordée de préférence en faisant varier l'indice de réfraction du milieu au moyen d'une variation de température, de préférence dans une plage comprise entre -20 et +120°C.

D'autres caractéristiques et avantages de la présente invention apparaîtront au cours de la description suivante de modes de réalisation donnés bien entendu à titre illustratif et non limitatif, et dans le dessin annexé sur lequel la figure unique représente

- la figure 1 représente la variation d'indice de réfraction RI mesuré pour une longueur d'onde λ de 589nm en fonction de la masse M en % de l'un des sels composant un mélange de deux sels liquides à la température ambiante,
- la figure 2 représente la variation d'indice de réfraction RI mesuré pour une longueur d'onde λ de 589nm en fonction de la masse M en % de l'un des sels composant une solution d'un sel solide à la température ambiante dans un sel liquide à la température ambiante,
- la figure 3 montre, pour un même mélange, la variation de l'indice de réfraction RI mesuré pour une longueur d'onde λ de 589nm en fonction de la température T en degrés Celsius,

- la figure 4 est un schéma simplifié d'un exemple de réalisation d'un réseau long pas LPG immergé dans un milieu d'indice adaptable selon l'invention,
- la figure 5 est la réponse spectrale en transmission d'un réseau à long pas LPG en fonction de son degré d'immersion dans un milieu d'indice adaptable selon l'invention ; la puissance normalisée P en dBm est donnée en ordonnée, et en abscisse la longueur d'onde λ est donnée en nanomètres nm.

EXEMPLES 1 A 9

L'étude suivante concerne l'influence de la composition du mélange de deux sels sur l'indice de réfraction de ce mélange.

La figure 1 montre la variation d'indice de réfraction (courbe 10) qu'il est possible d'obtenir avec un mélange de composition variable de deux sels liquides à la température ambiante. Le mélange comprend un premier sel HMIM, Cl et un second sel BMIM, $BF_4$. La variation de l'indice de réfraction IR a été représentée en fonction de la masse M du premier sel HMIM, Cl exprimé en % massique dans le mélange.

Cette variation linéaire montre que la miscibilité des deux sels est correcte. Ces mélanges permettent de répondre à une demande d'indice compris entre 1,46 et 1,48 dans une plage de température encadrant la température ambiante, en sélectionnant la composition du mélange la mieux adaptée à partir de ces courbes.

Dans le tableau 1 suivant, on présente les valeurs d'indice de réfraction (indice mesuré à 589 nm et 20,0°C) du mélange de deux sels liquides HMIM,Cl et BMIM,$BF_4$ selon les proportions massiques de deux constituants. La quantité de chaque sel est exprimée en % massique. On observe une linéarité correcte entre indice de réfraction IR et la proportion des constituants du mélange binaire.

Tableau 1

| exemple | HMIM,Cl en % | BMIM,$BF_4$ en % | IR |
|---|---|---|---|
| 1 | 87.9 | 12.1 | 1,5027 |
| 2 | 74.5 | 25.5 | 1,4932 |
| 3 | 62.1 | 37.9 | 1,4831 |
| 4 | 50.5 | 49.5 | 1,4714 |
| 5 | 50.6 | 49.4 | 1,4711 |
| 6 | 40.1 | 59.9 | 1,4623 |
| 7 | 32.4 | 67.6 | 1,4559 |
| 8 | 22.8 | 77.2 | 1,4463 |
| 9 | 12.3 | 87.7 | 1,4345 |

EXEMPLE 10

L'exemple suivant concerne le cas d'un mélange d'un sel initialement solide BMIM,Br mis en solution dans un sel liquide BMIM,$BF_4$. La courbe 20 de la figure 2 montre variation de l'indice de réfraction en fonction de la composition du mélange binaire BMIM,$BF_4$ / BMIM,Br

On observe une linéarité correcte entre indice de réfraction et la proportion des constituants du mélange binaire.

EXEMPLES 11 ET 12

L'étude suivante concerne l'influence de la température sur l'indice de réfraction du mélange de deux sels liquides.

La figure 3 est relative à deux mélanges 11 et 12 de deux sels liquides pour lesquels on a relevé la variation d'indice de réfraction en fonction de la température.

Le mélange 11 (courbe 30) est composé de 48,2% en poids d'un sel HMIM, Cl et de 51,8% en poids d'un sel BMIM, $PF_6$ commercialisés par la société "SOLVENT INNOVATION". Le mélange A présent un indice de réfraction de 1,4659 pour une longueur d'onde de 589nm à une température de 20°C, et de 1,4773 à une température de 0°C.

Le mélange 12 (courbe 31) est composé de 50,5% en poids d'un sel HMIM, Cl et de 49,5% en poids d'un sel de référence BMIM, BF4. Le mélange B présent un indice de réfraction de 1,4714 pour une longueur d'onde de 589nm à une température de 20°C, et de 1,4741 à une température de 0°C.

On observe que, dans les deux cas, cette variation est linéaire décroissante avec l'augmentation de la température et de pente dn/dT de l'ordre de $-3.10^{-4}$.

EXEMPLES 13 A 17

On a étudié la stabilité de l'indice de réfraction à la chaleur humide des sels ou mélanges de sels selon l'invention. Le test a été effectué à température élevée en présence d'humidité : température de +85°C et 85% d'humidité relative.

Les résultats sont regroupés dans le tableau 2 suivant. L'indice de réfraction IR est mesuré avant et après le test à 589 nm et 20,0°C. Le poids de l'échantillon est relevé avant et après le test, et ce suivi gravimétrique est représenté par la variation de masse Δm en % définie par : Δm = [(masse de produit initiale - masse du produit après test) / masse de produit initiale] x 100.

Tableau 2

| Exemple | formule | Δm | IR avant test | IR après test |
|---|---|---|---|---|
| 13 | BMIM,$PF_6$ | 0,3% | 1,4108 | 1,4103 |
| 14 | BzMIM,$BF_4$/BzBMIM,Br | 0,7% | 1,4742 | 1,4744 |
| 15 | BMIM,$BF_4$/BzMIM,$BF_4$ | 0,3% | 1,4632 | 1,4683 |
| 16 | BMIM,$BF_4$/BMIM,Br | 0,7% | 1,4610 | 1,4596 |
| 17 | BMIM,NfO | - | 1,4038 | 1,4034 |

On observe que l'indice de réfraction reste constant avant et après le test, ainsi que la tension superficielle et la viscosité du sel ou mélange de sels. De plus, en présence d'un environnement humide et à haute température, ces liquides ioniques montrent une bonne stabilité puisque la prise de poids reste très faible (Δm < 1%). L'absorption d'eau par ces sels reste très modérée, et n'induit aucune modification de leurs propriétés physico-chimiques et optiques.

EXEMPLE 18

Selon un mode particulier de réalisation de la présente invention, le milieu optique peut par exemple contenir un sel de N, N' dialkylimidazolium associé à un anion $BF_4^-$ dont les groupes $R^1$ et $R^2$ sont respectivement un groupe méthyle et un groupe butyle. Sa température de cristallisation est alors de -80°C. Ce sel possède des propriétés antiélectrostatiques particulièrement intéressantes pour l'application télécommunications envisagée. A titre de comparaison, si on remplace le groupe méthyle par un groupe éthyle ou butyle, la température de cristallisation du sel devient de +15°C ce qui le rend d'usage moins facile.

EXEMPLE 19

L'étude suivante concerne l'influence du degré d'immersion d'un réseau à long pas LPG dans un milieu liquide selon l'invention. On peut faire varier le degré d'immersion du LPG dans le milieu notamment au moyen d'un dispositif analogue à celui décrit dans le document de H. LABIDI et al. intitulé "Dynamic gain control of optical amplifier using an all-fibre solution" présenté à la 28ème Conférence européenne sur l'Optique (8-12 septembre 2002).

La figure 4 représente de manière schématique et simplifiée une fibre optique 40 sur une portion 41 de laquelle a été inscrit un réseau à long pas LPG. Cette portion 41 est peut être au moins partiellement immergée dans un milieu selon l'invention comprenant un sel liquide, et contenu dans un réservoir 42 apte à se déplacer le long de la fibre 40. Le réservoir 42 est représenté ici dans la position initiale 43 dans laquelle la portion 41 portant le réseau n'est pas immergé dans le milieu (déplacement nul). Le réservoir 42 peut être déplacé dans la direction représentée par la flèche 44 (aller), et la portion 41 se trouve alors progressivement immergée dans le milieu contenu dans le réservoir 42. Le réservoir 42 peut aussi être déplacé en sens inverse dans la direction représentée par la flèche 45 (retour).

La figure 5 représente la réponse spectrale du réseau à long pas LPG, d'une longueur totale de 30mm, immergé dans un milieu d'indice 1,404 à température ambiante (20°C). Les courbes 50 et 51 correspondent à un déplacement nul (position initiale), la réponse étant mesurée respectivement à l'aller et au retour. Les courbes 52 et 53 correspondent à un déplacement de 4mm à partie de la position initiale, la réponse étant mesurée lors du passage dans cette position respectivement au cours d'un déplacement à l'aller et au retour. Les courbes 54 et 55 correspondent à un déplacement de 8mm à partie de la position initiale, la réponse étant mesurée respectivement à l'aller et au retour. Par déplacement de la zone immergée du réseau à long pas inscrit, une variation continue et réversible du contraste est observée avec une conservation de la longueur d'onde de Bragg.

## Revendications

1. Dispositif optique comprenant un composant optique et un milieu optique d'indices optiques différents, ledit composant optique étant au moins partiellement immergé dans ledit milieu, **caractérisé en ce que** ledit milieu comprend au moins un sel qui se trouve à l'état liquide dans le domaine de température d'utilisation et de stockage dudit composant optique.

2. Dispositif selon la revendication 1, dans lequel ledit sel est à l'état liquide dans une plage de température comprise entre -40°C et +200°C.

3. Dispositif selon la revendication 2, dans lequel ladite plage est comprise entre -40°C et +85°C.

4. Dispositif selon la revendication 2, dans lequel ladite plage est comprise entre -20°C et +120°C.

5. Dispositif selon l'une quelconque des revendications 2 à 4, dans lequel ladite plage est comprise entre -10°C et +70°C.

6. Dispositif selon l'une quelconque des revendications précédentes, dans lequel ledit milieu contient un mélange d'au moins deux sels.

7. Dispositif selon la revendication 6, dans lequel ledit mélange contient au moins un premier sel à l'état liquide et au moins un deuxième sel dissout dans ledit premier sel.

8. Dispositif selon l'une quelconque des revendications 6 et 7, dans lequel la composition dudit mélange reste stable au cours du temps.

9. Dispositif selon l'une quelconque des revendications précédentes, dans lequel ledit sel contient un anion et un cation.

10. Dispositif selon la revendication 9, dans lequel ledit anion est choisi parmi un fluorure $F^-$, un chlorure $Cl^-$, un bromure $Br^-$, un iodure $I^-$, un aluminochlorate $AlClO_4^-$, un perchlorate $ClO_4^-$, un tétrafluoroborate $BF_4^-$, un hexafluorophosphate $PF_6^-$, un hexafluroarsenate $AsF_6^-$, un hydrogénosulfate $HSO_4^-$, un trifluoroacétate $CF_3COO^-$, un heptafluoro-1-butanoate $C_3F_7COO^-$, un trifluoromethanesulfonate $CF_3SO_3^-$ (ou "triflate" $TfO^-$), un nonafluorobutylsulfonate $C_4F_9SO_3^-$ (ou "nonaflate" $NfO^-$), un bis-trifluoromethanesulfonimide $N(CF_3SO_2)_2^-$ (ou $Tf_2N^-$), et un bis-trifluoromethanesulfoneméthide $C(CF_3SO_2)_2^-$ (ou $Tf_2C^-$).

11. Dispositif selon l'une quelconque des revendications 9 et 10, dans lequel ledit cation est choisi parmi l'ammonium $NH_4^+$, le sulfonium $HSO_3^+$, le phosphonium $PH_4^+$, le lithium $Li^+$, le pyridinium $C_5H_5NH^+$, les cations imidazolium $(C_3H_6N_2X^1X^2)^+$, les cations ammonium $(X^1X^2X^3X^4N_4)^+$, les cations sulfonium $(X^1X^2X^3S)^+$, les cations phosphonium $(X^1X^2X^3X^4P)^+$, et les cations pyridinium $(X^1C_5H_4NX^2)^+$, dans lesquels $X^1$, $X^2$, $X^3$, $X^4$ représentent des groupements de type aromatique ou aliphatique.

12. Dispositif selon l'une quelconque des revendications 9 à 11, dans lequel ledit sel a pour cation le N, N' dialkylimidazolium de formule générale :

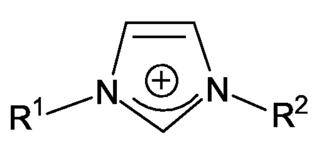

dans laquelle $R^1$ et $R^2$ sont des groupes aliphatiques ou aromatiques contenant un anion.

13. Dispositif selon la revendication 12, dans lequel $R^1$ et $R^2$ semblables ou différents contiennent chacun au moins un anion choisi parmi $F^-$, $Cl^-$, $Br^-$, $I^-$, $BF_4^-$, $PF_6^-$, $AsF_6$, $ClO_4^-$, $AlClO_4^-$, $CF_3COO^-$, $C_3F_7COO^-$, $CF_3SO_3^-$, $C_4F_9SO_3^-$, $(CF_3SO_2)_2N^-$, $(CF_3SO_2)_2C^-$.

**14.** Dispositif selon l'une quelconque des revendications 12 et 13, dans lequel $R^1$ et $R^2$, semblables ou différents, sont un groupe aliphatique choisi parmi le groupe méthyle $-CH_3$, le groupe éthyle $-C_2H_6$, le groupe propyle $-C_3H_7$ et le groupe butyle $-C_4H_9$.

**15.** Dispositif selon la revendication 14, dans lequel ledit sel contient au moins un anion choisi parmi $Cl^-$, $Br^-$, $PF_6^-$, $BF_4^-$, $(CF_3SO_2)_2N^-$, $C_4F_9SO_3^-$.

**16.** Dispositif selon l'une quelconque des revendications précédentes, dans lequel ledit composant optique est un réseau de Bragg à long pas, dit "LPG".

**17.** Dispositif selon la revendication 16, dans lequel ledit réseau est accordé par modification de la zone d'immersion du composant optique dans ledit milieu.

**18.** Dispositif selon l'une quelconque des revendications 16 et 17, dans lequel la réponse optique dudit réseau est sensiblement constante dans la plage d'utilisation dudit composant optique.

**19.** Dispositif selon la revendication 18, dans lequel la plage d'utilisation dudit composant optique est comprise entre -10 et +70°C.

**20.** Dispositif selon l'une quelconque des revendications 1 à 15, dans lequel ledit composant optique est un tronçon de fibre à cristal photonique.

**21.** Dispositif selon la revendication 20, comprenant une unité de commande en température pour commander la valeur de l'indice de réfraction du milieu.

**22.** Dispositif selon la revendication 21, dans lequel l'unité de commande en température est apte à soumettre ledit milieu à une température comprise entre - 20°C et +120°C

**Fig. 1**

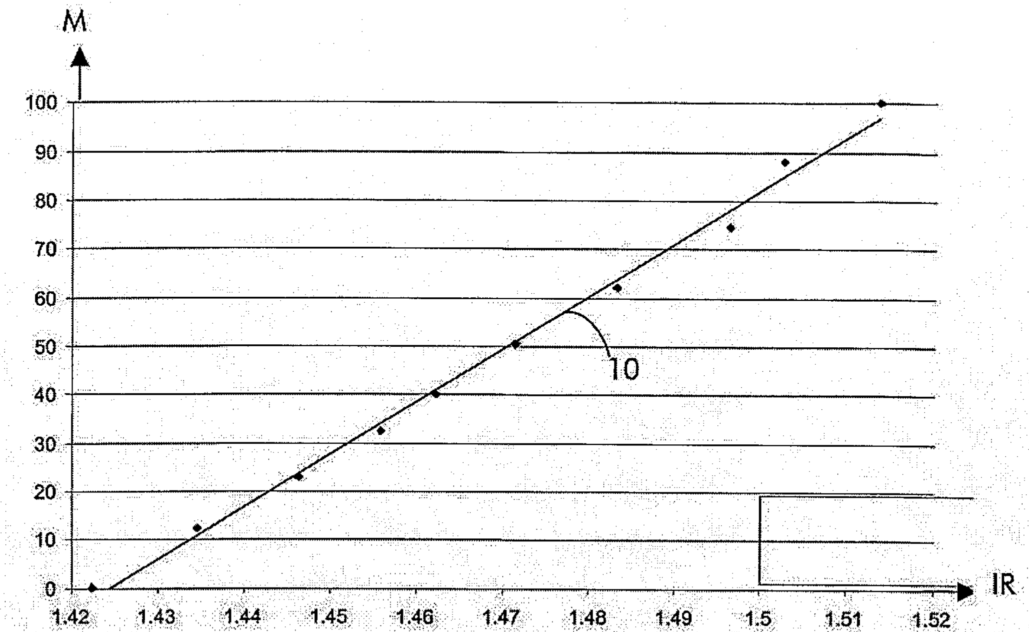
M
100
90
80
70
60
50
40
30
20
10
0
1.42
1.43
1.44
1.45
1.46
1.47
1.48
1.49
1.5
1.51
1.52
IR
10

**Fig. 2**

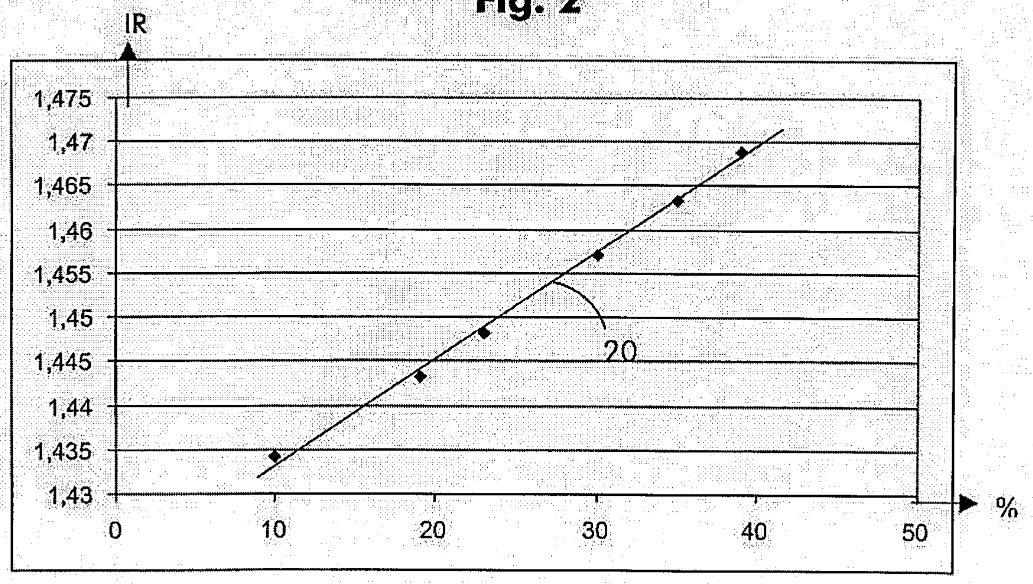
IR
1,475
1,47
1,465
1,46
1,455
1,45
1,445
1,44
1,435
1,43
0
10
20
30
40
50
%
20

Fig. 3

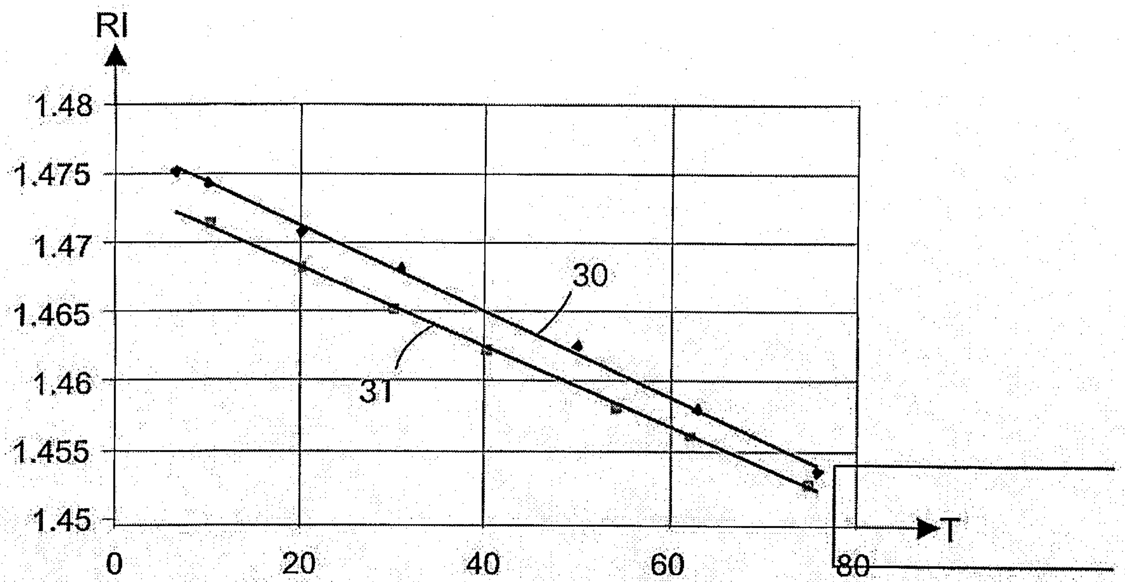
RI
1.48
1.475
1.47
1.465
1.46
1.455
1.45
0
20
40
60
80
T
30
31

Fig. 4

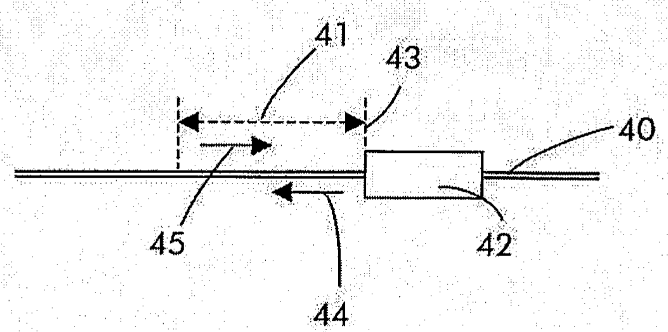
41
43
40
45
42
44

Fig. 5

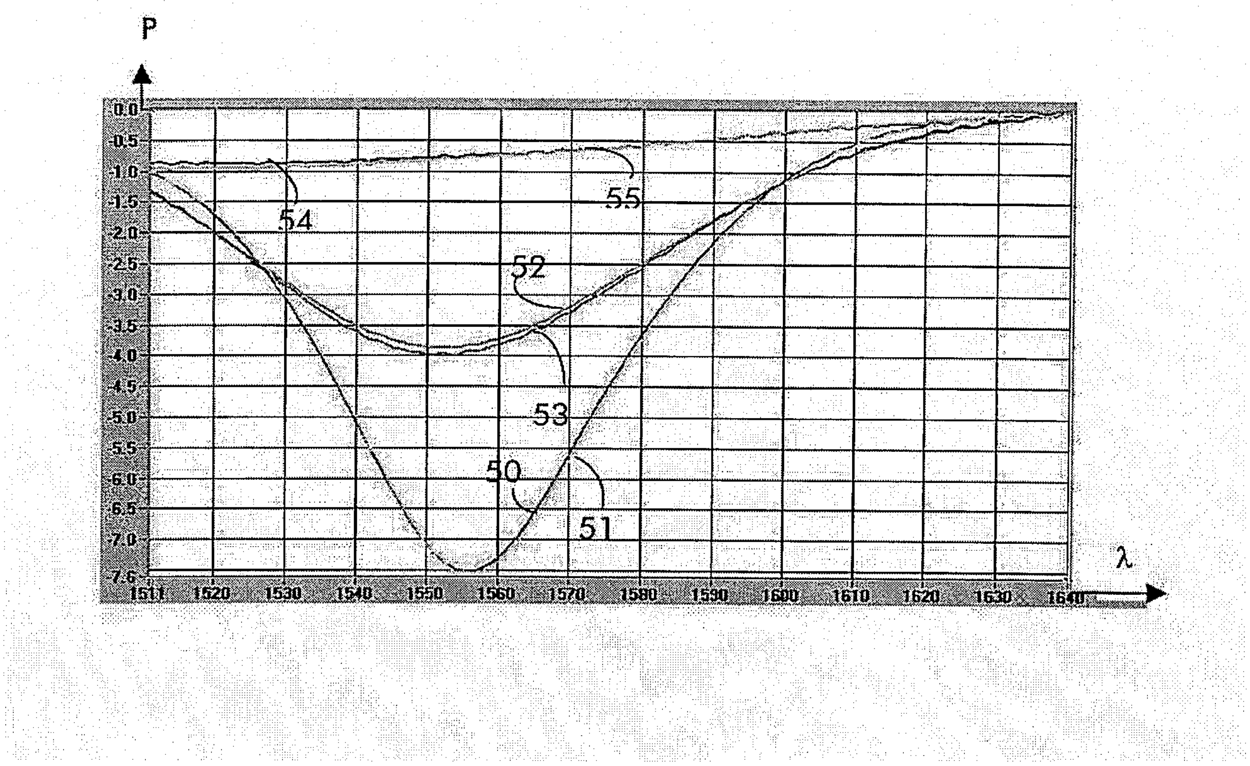
P
0.0
-0.5
-1.0
-1.5
-2.0
-2.5
-3.0
-3.5
-4.0
-4.5
-5.0
-5.5
-6.0
-6.5
-7.0
-7.6
1511
1520
1530
1540
1550
1560
1570
1580
1590
1600
1610
1620
1630
1640
λ
50
51
52
53
54
55

Office européen des brevets

# RAPPORT DE RECHERCHE EUROPEENNE

Numéro de la demande
EP 05 10 4741

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DEL SESTO R E ET AL: "Modeling, synthesis, and characterization of third-order nonlinear optical salts" PROCEEDINGS OF THE SPIE - THE INTERNATIONAL SOCIETY FOR OPTICAL ENGINEERING SPIE-INT. SOC. OPT. ENG USA, vol. 5212, no. 1, 2003, pages 292-298, XP002314187 ISSN: 0277-786X * page 292 * * alinéa [0004] * ----- | 1-15 | G02B1/06 G02B6/16 G02B6/34 |
| X | EP 1 372 006 A (ASTON PHOTONIC TECHNOLOGIES LTD) 17 décembre 2003 (2003-12-17) * alinéa [0028] * ----- | 1,16, 18-22 | |
| A,D | LABIDI H ET AL: "DYNAMIC GAIN CONTROL OF OPTICAL AMPLIFIER USING AN ALL-FIBRE SOLUTION" ECOC 2002. 28TH. EUROPEAN CONFERENCE ON OPTICAL COMMUNICATION. POST-DEADLINE PAPERS. COPENHAGEN, DENMARK, SEPT. 8 - 12, 2002, EUROPEAN CONFERENCE ON OPTICAL COMMUNICATION.(ECOC), vol. CONF. 28, 12 septembre 2002 (2002-09-12), page PD18, XP001158370 * le document en entier * ----- | 1-22 | DOMAINES TECHNIQUES RECHERCHES (Int.Cl.7): G02B G02F |
| A | US 2003/194182 A1 (GUERIN JEAN-JACQUES ET AL) 16 octobre 2003 (2003-10-16) * figure 3a * ----- | 16-22 | |

Le présent rapport a été établi pour toutes les revendications

| Lieu de la recherche | Date d'achèvement de la recherche | Examinateur |
|---|---|---|
| La Haye | 4 août 2005 | Quertemont, E |

2

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 05 10 4741

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-08-2005

| Document brevet cité au rapport de recherche | Date de publication | Membre(s) de la famille de brevet(s) | Date de publication |
|---|---|---|---|
| EP 1372006 A | 17-12-2003 | EP 1372006 A1 | 17-12-2003 |
| | | AU 2003240068 A1 | 31-12-2003 |
| | | WO 03107053 A1 | 24-12-2003 |
| US 2003194182 A1 | 16-10-2003 | FR 2838525 A1 | 17-10-2003 |
| | | EP 1355390 A1 | 22-10-2003 |

EPO FORM P0460

Pour tout renseignement concernant cette annexe : voir Journal Officiel de l'Office européen des brevets, No.12/82